# EUROPEAN PATENT APPLICATION

(11) **EP 4 215 046 A1**
(43) Date of publication of application: **26.07.2023**
(21) Application number: 22153332.6
(22) Date of filing: 25.01.2022
(51) Int. Cl.: A01M 21/00

(54) **CONTROL FOR A WEEDING ROBOT**

(71) Applicant: Husqvarna AB, 56182 Huskvarna (SE)
(72) Inventor: Lutz, Constantin, 80804 München (DE); Kaiser, Robert, 80331 München (DE); Hohmann, Raphael, 80469 München (DE)
(74) Representative: Finkele, Rolf

(57) **Abstract**

A system comprising a robotic device and a computing device. The system is associated with a plant data base, that contains physical parameters of at least one plant. Further there is a the computing device that includes a software module forming an artificial intelligence to allow to distinguish between plants that one would like to cultivate in its lawn and/or garden environment and representations if unwanted plants, thus called weed. The system further has a user interface that allows a user to interact with the system.

The user interface allows to display to a user at least one representation of a plant where the software module forming an artificial intelligence requests a user decision on whether the plant is one that one would like to cultivate in its lawn and/or garden environment and representations if unwanted plants. Thereby the system takes action or not according to the decision taken by the user. In an alternative of additional embodiment the user interface allows to present to the system with information about the plant related set-up of the lawn and/or garden environment the system takes care of.

## Description

The invention concerns the control for a robotic device that can move, preferably autonomously, in a lawn and/or garden environment. The robotic device has at least one sensor, preferably a camera sensor system, associated with it that is able to derive a representation, preferably a camera or video image, of a plant.

The robotic device comprises a wireless link to an external computing device, preferably being hand held and most preferably being a mobile phone, that allows the control of the robotic device. The computing device is associated with a plant data base, that contains physical parameters of at least one plant. The physical parameters comprises at least one representation, for example a camera or video image, of a plant that shows its appearance in at least one grow stage. Most preferably each plant is associated with a multitude of representation, preferably multiple camera or video images, that also shows different growth stages of a plant; for example one right at the beginning of the growth when the plant just exits the soil, one of an intermediate growth stage and one that shows the plant in a typical configuration when it is fully grown.

There is a software module forming an artificial intelligence associated with the system comprising the robotic device and the computer device. This software module forming an artificial intelligence that can compare a representation, preferably camera or video images, of a plant with the data of a plant data base. This plant data base contains suitable representations of plants that one would like to cultivate in its lawn and/or garden environment and representations if unwanted plants, thus called weed. It is obvious to the one in the art that what is said to be a plant database could as well be a set of different data bases.

By using this software module forming artificial intelligence the system comprising the robotic device and the computer device can make in many cases a decision if the representation of a plant provided by the associated at least one sensor is a plant that one would like to cultivate or if the plant is an unwanted plant. If it is an unwanted plant this plant is classified as weed and has to be destroyed and/or removed.

In many cases the decision on the type of plant and required action can be taken automatic and/or autonomous. Thus in this case the system comprising the robotic device and the computer device works some sort of non-depended from any user interaction, at least if it comes to decision making and action taking.

There are cases where the system comprising the robotic device and the computer device is not reliably able to make the decision making and action taking independently and needs the interference of the system's user. Preferably the system's user is given, maybe by a set-up menu or a personalized menu, the possibly to set a level of recognition (some sort of a threshold) for the user to accept the system to work independent and at which level the user wants to be involved in the decision making and action taking.

To allow the user to be involved in the decision taking and action taking when it comes to distinguish between a plant one wants to cultivate and an unwanted plan that is classified to be weed and thus should be removed and/or destroyed the computer device provides for a suitable user interface.

In an alternative of additional embodiments the user interface allows to present to the system information about the plant related set-up of the lawn and/or garden environment the system takes care of. Due to this the artificial intelligence embodied in the software module is supported with decision making. Being linked to a data base that contains representation of the pant within different grows statuses helps to distinguish plant that one wants to cultivate from unwanted plants. This already when the plant just come out of the soil and do not at all look like the 'final' plant - for example roses that look very different at the beginning of it growing than at the stage where it blossoms. In particular at the beginning of growth it is often difficult to distinguish plant to be cultivated from unwanted plants. Thus it is of significant help if a software module forming artificial intelligence is informed about the type and look of plants in a certain area. Thus if a user defines a certain area to be a tulip beet the artificial intelligence associated with robotic device when being in this area already knows which type of sensor data (plant representations) it has to expect.

To provide the system with information about the positioning of plants within the lawn and/or garden environment it would be of advantage there is a link to a data base that at least have a part of a geometric representation of the lawn and/or garden environment. This would make its display with the user interface much easier and/or more intuitive. On the other hand one could also think of a mere schematic representation of the lawn and/or garden environment.

In the following an exemplary interface and its working is introduced. It is obvious that this the figures just an exemplary embodiment of the user interface and the method of working described is therefore associated with this exemplary embodiment. There are other straight forward and obvious modification of this user interface and thus the associated method possible that still follows the idea described therein and will be suitable for a system comprising a robotic device with a wireless link to an external computing device. Thus the figures shown and the method described in the following shall not be limiting but just shall be understood to be exemplary.

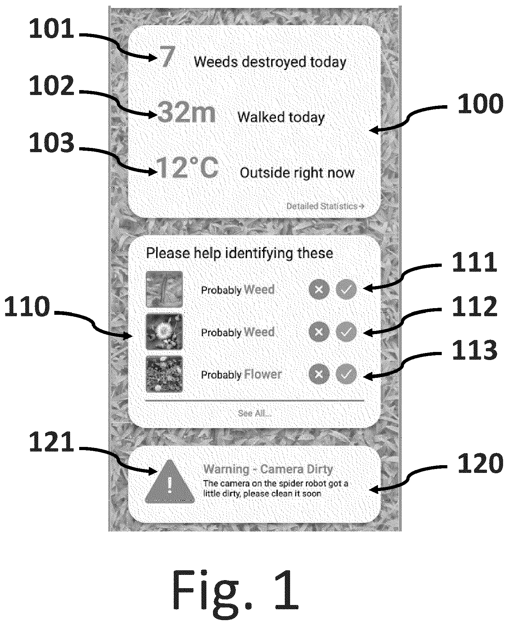

Fig. 1 shows a user interface having 3 different information windows 100, 110 and 120. The first information window 100 is to display various information about the robotic device, the working situation and/or some environmental data. For example, there could be some statistic about the "weed destroyed today" 101 or the distance "walked today" 102; but there also could be some information about the temperature "outside right now" 103.

Another information window 120 could be used to display waring messages or alerts 121 informing the user for example about a dirty camera senor.

Within a further information window 110 the system could inform the user about situations where the software module forming an artificial intelligence would like to an interaction of the user in the cause of decision making and action taking. That is preferably the case where the system is unable to independently decide whether or not a detected plant is an unwanted plant and need removal and/or destruction. In this case the system preferably present the sensor data to the user and allows the user to take the decision how to proceed. In the example with Fig. 1 the systems presents 3 plant images with entries 111, 112 and 113 that it questions to be weed or not. The user thus can take its decision after inspecting the presented representations. Obviously there could be different representations with one single plant and the user can scroll through them. Also there could be more than these three cases where user interaction is needed and the user interface might allow to scroll through these various cases.

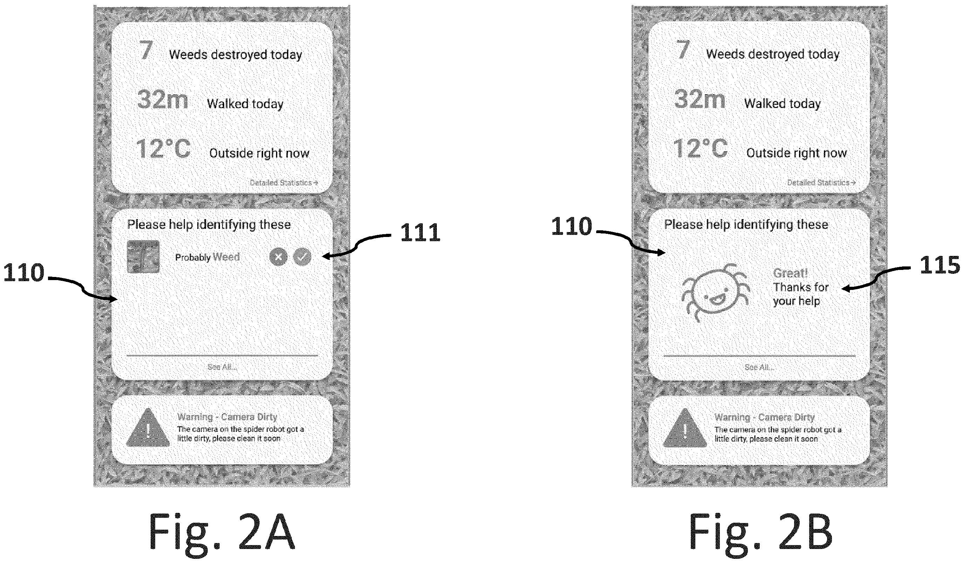

Fig. 2A shows the situation after a user has within information window 110 taken decision with 2 of the 3 cases shown two him at the beginning as shown with Fig. 1. Thus only one case is displayed and left to take a decision, while the two cases where the user already took a decision did disappear.

If the user took decisions with all the cases displayed with information window 110 the system might show a message 115 informing the user that currently there is no user interaction necessary. This situation is exemplarily shown with Fig. 2B.

The decisions by the user due to user interaction might be used by the software module to train the artificial intelligence and thus preferably the necessary user interaction might get less with time.

Another alternative or additional help with reducing the need for user interaction and thus an autonomous working of the system comprising a robotic device linked with a computer device is provided with a user interface that allows to inform the system about the set-up of the garden and/or lawn environment.

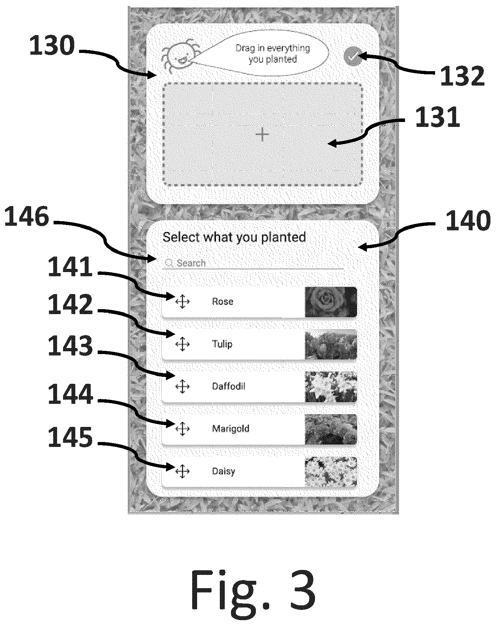

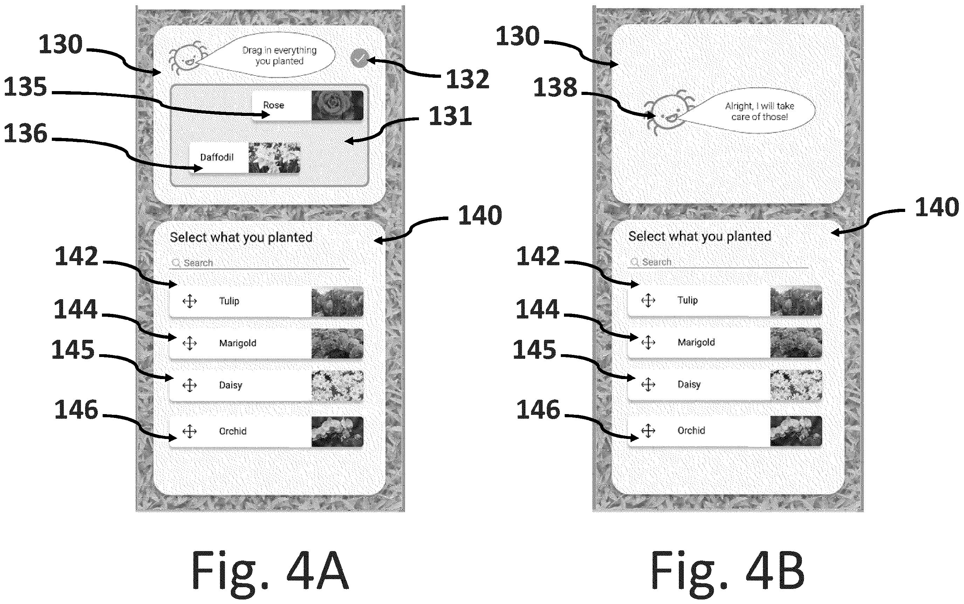

An example with this is presented with Fig. 3 and 4. The user interface with Fig. 3 is divided into two information windows 130 and 140. The information window 130 contains a schematic representation of a land and/or garden environment 131 as well as a virtual confirmation button 132. The information window 140 contains representations of plants 141, 142, 143 , 144 and 145. In one embodiment these are plants taken from a data base where a user did input all the plants of interest. There is also a search field 146 where a user can search for a certain plant not on display yet.

As shown with Fig. 4A the user can, preferably by moving the plant representation from information window 140 into information window 130, describe the setup of the lawn and/or garden area. In the example the beets displayed are of simple rectangular shape, but it is obvious that there could be any shape and there could be software tools to manipulate the shapes. Also whit this example a move of plants between the information windows will delete them in the other, but it is obvious that the could be duplications of them.

If the setup of the representation of the lawn and/or garden environment is finally done a user can activate the virtual button 132 and the screen might exemplarily change to what is shown with Fig. 4B. That is the representation of the lawn and/or garden environment disappear and instead a confirmation sign 138 will appear and inform the user that the system has accepted the representation.

## Claims

1. System comprising a robotic device and a computing device, being associated with a plant data base, that contains physical parameters of at least one plant,
wherein the computing device includes a software module forming an artificial intelligence to allow to distinguish between plants that one would like to cultivate in its lawn and/or garden environment and representations if unwanted plants, thus called weed,
and having a user interface that allows a user to interact with the system, **characterized in that**,
the user interface allows to display to a user at least one representation of a plant where the software module forming an artificial intelligence requests a user decision on whether the plant is one that one would like to cultivate in its lawn and/or garden environment and representations if unwanted plants,
wherein the system takes action or not according to the decision taken by the user.

2. The system of claim 1, wherein the robotic device is wirelessly connected with at least part of the computer device.

3. System comprising a robotic device and a computing device, being associated with a plant data base, that contains physical parameters of at least one plant,
wherein the computing device includes a software module forming an artificial intelligence to allow to distinguish between plants that one would like to cultivate in its lawn and/or garden environment and representations if unwanted plants, thus called weed,
and having a user interface that allows a user to interact with the system,
**characterized in that**,
the user interface allows to present to the system with information about the plant related set-up of the lawn and/or garden environment the system takes care of.

4. The system of claim 3, wherein the system is associated with a map data base that comprises at least parts of the geometric description of the lawn and/or garden environment the system takes care of.

5. The system of any one of the preceding claims, wherein the user interface allows user interaction when it comes to decision taking about the sensed as well as allowing the present the system with environmental information about the lawn and/or garden environment.
